# EUROPÄISCHE PATENTSCHRIFT

(11) **EP 3 812 029 B1**
(45) Veröffentlichungstag und Bekanntmachung des Hinweises auf die Patenterteilung: **01.03.2023**
(21) Anmeldenummer: 19205232.2
(22) Anmeldetag: 25.10.2019
(51) Int. Cl.: B01D 46/00, G06N 20/00

(54) **VORHERSAGE VON ZUSTANDSGRÖSSEN FÜR LUFTFILTER**
PREDICTION OF STATE VARIABLES FOR AIR FILTERS
PRÉDICTION DES GRANDEURS D'ÉTAT POUR FILTRES À AIR

(43) Veröffentlichungstag der Anmeldung: 28.04.2021
(73) Patentinhaber: Carl Freudenberg KG, 69469 Weinheim (DE)
(72) Erfinder: Caesar, Thomas, 69469 Weinheim (DE); Schulz, Karsten, 74924 Neckarbischofsheim (DE); Tapper, Renate, 64625 Bensheim (DE)

(56) Entgegenhaltungen:
- EP-A1- 3 293 384
- EP-A1- 3 328 089
- WO-A1-2011/072332
- WO-A1-2016/089688
- WO-A1-2018/182357
- WO-A1-2018/200094
- WO-A1-2019/046381
- WO-A2-2019/172736
- CN-A- 108 421 337
- DE-A1-102017 223 194
- DE-U1-202018 102 632
- KHAZRAEI VIZHEMEHR ALI ET AL: "Gas-phase filters breakthrough models at low concentration - Effect of relative humid", BUILDING AND ENVIRONMENT, PERGAMON PRESS, OXFORD, GB, Bd. 75, 27. Januar 2014 (2014-01-27), Seiten 1-10, XP028832986, ISSN: 0360-1323, DOI: 10.1016/J.BUILDENV.2014.01.010

## Beschreibung

Die Erfindung betrifft die Planung und Überwachung des Betriebes von Luftfiltern in industriellen Zuluftfilterungssystemen.

### Stand der Technik

Viele industrielle Anlagen, wie etwa Gasturbinen, Kompressoren und andere Turbomaschinen, in denen Luft verdichtet wird, benötigen große Mengenströme an Zuluft. Hierbei gibt es häufig Wünsche bzw. Anforderungen dahingehend, welche Belastung der Zuluft mit Partikeln höchstens zulässig ist. Viele Arten von Partikeln können sich mit der Zeit in der Turbomaschine anlagern (Fouling) und so die Aerodynamik von Turbinenschaufeln verändern, wodurch der Wirkungsgrad verschlechtert wird und eine regelmäßige Reinigung der Turbomaschine nötig wird. Bestimmte Arten von Partikeln können auch durch mechanische Erosion, und/oder durch chemische Korrosion, direkt Schäden an den Turbinenschaufeln verursachen.

Die Broschüre "Zuluftfiltration" der Arbeitsgemeinschaft für sparsamen und umweltfreundlichen Energieverbrauch e.V. (1991) beschreibt das Problem im Detail und zeigt auf, wie sich durch die geeignete Auslegung einer Filterung für die der Turbomaschine zugeführte Luft die Standzeit und der Wirkungsgrad der Turbomaschine verbessern lassen.

Da die zurückgehaltenen Partikel nicht einfach verschwinden, sondern sich in der Filteranordnung anlagern oder in sonstiger Weise mit der Filteranordnung wechselwirken, müssen Luftfilter regelmäßig gereinigt und/oder gewechselt werden.

Dies verursacht Kosten und Stillstandszeiten der mit der gefilterten Zuluft versorgten Anlage.

WO 2016/089 688 A1 offenbart computerimplementierte Systeme und Verfahren zur Vorhersage einer nötigen Auswechslung eines Luftfilters in einer Klimaanlage für ein Gebäude.

WO 2019/046 381 A1 offenbart Verfahren zum Aufnehmen von Daten zu einem Filtermedium eines Luftfilters und zum Ermitteln von Vorschlägen in Bezug auf Auswahl und Nutzung des Luftfilters.

EP 3 328 089 A1 offenbart ein Analysesystem zur Analyse eines Filterelements in einem Fahrzeug auf der Basis der von verschiedenen Sensoren gelieferten Daten.

EP 3 293 384 A1 offenbart ein System und Verfahren zur Überwachung des Degradationszustandes eines Kompressors, das wiederum den Degradationszustand eines vorgeschalteten Luftfilters heranzieht.

CN 108 421 337 A offenbart ein Verfahren zur Vorhersage der Lebensdauer eines Filters unter Heranziehung der Konzentration an Luftverschmutzung in der Umgebung.

DE 10 2017 223 194 A1 offenbart ein Verfahren und eine Vorrichtung zur Diagnose eines Partikelfilters in einem Abgasstrang einer Brennkraftmaschine.

DE 20 2018 102 632 U1 offenbart eine Vorrichtung zum Ermitteln einer Modellfunktion zur Beschreibung eines Systemverhaltens für langfristige Vorhersagen, wobei die Modellfunktion durch einen Parametervektor beschrieben wird und eine Übergangsfunktion in der Modellfunktion durch einen Gaußprozess abgebildet ist.

US 2020/003 440 A1 offenbart ein Klimagerät, das seinen Luftfilter mit einer Kamera beobachtet und durch Auswertung des Kamerabildes mit einem neuronalen Netzwerk den Beladungszustand des Filters ermittelt.

WO 2011/072 332 A1 offenbart ein Steuerungssystem für ein Gebäudeklimatisierungssystem auf der Basis eines thermischen Modells.

(A. K. Vizhemehr et al., "Gas-phase filters breakthrough models at low concentration - Effect of relative humidity", Building and Environment 75, 1-10, ISSN: 0360-1323, doi: 10.1016/J.BUILDENV.2014.01.010 (2014)) offenbart ein Verfahren zur Vorhersage des Zeitpunkts, zu dem ein Adsorptionsfilter auf der Basis von Aktivkohle für Luft in Innenräumen gewartet und/oder regeneriert werden muss.

WO 2018/200 094 A1 offenbart ein weiteres Verfahren zur Steuerung eines Gebäudeklimatisierungssystems auf der Basis einer Vorhersage der Temperaturen in verschiedenen Zonen des Gebäudes.

### Aufgabe und Lösung

Aufgabe der vorliegenden Erfindung ist es, die Reinigung bzw. den Wechsel von Filtern in der Zuluftfiltration dahingehend besser planbar zu machen, dass die Kosten für diese Maßnahmen optimiert werden, wobei zugleich die Wahrscheinlichkeit vermindert wird, dass ungeplante Wartungsarbeiten notwendig werden.

Diese Aufgabe wird erfindungsgemäß gelöst durch ein Verfahren zum Trainieren eines Machine Learning-Modells, das eine Vorhersage der Änderung mindestens einer Zustandsgröße aus Einflussgrößen ermöglicht, gemäß Hauptanspruch sowie durch ein Verfahren, das das Modell im Anschluss nutzt und eine Änderung der Zustandsgröße vorhersagt. Weitere vorteilhafte Ausgestaltungen ergeben sich aus den darauf rückbezogenen Unteransprüchen.

### Offenbarung der Erfindung

Die Erfindung wird durch die Patentansprüche definiert. Ausgestaltungen und Beispiele, die nicht unter die Ansprüche fallen, werden präsentiert, um die beanspruchte Erfindung zu definieren und ihr Verständnis zu erleichtern.

Im Rahmen der Erfindung wurde ein Verfahren zur Vorhersage einer Änderung mindestens einer Zustandsgröße, welche die Standzeit und/oder Leistungsfähigkeit mindestens eines Luftfilters charakterisiert, entwickelt. Die Zustandsgröße kann insbesondere beispielsweise einen Beladungszustand, und/oder eine sich beim Betreiben des Luftfilters einstellende Druckdifferenz zwischen dem Eingang und dem Ausgang des Luftfilters, und/oder eine vom Beladungszustand oder von der Druckdifferenz beeinflusste weitere Größe, umfassen.

Bei dem Verfahren wird mindestens ein Wert mindestens einer Einflussgröße, von der die Änderung der Zustandsgröße je Zeiteinheit abhängt, erfasst. Weiterhin wird eine Zeitdauer, für die die Einflussgröße mit diesem Wert auf den Luftfilter wirkt, erfasst. Der mindestens eine Wert der mindestens einen Einflussgröße wird mindestens einem Modell zugeführt. Das Modell liefert eine Ausgangsgröße, die ein Maß für den durch die mindestens eine Einflussgröße bewirkten Beitrag zur Änderung der Zustandsgröße je Zeiteinheit ist. Aus der Ausgangsgröße und der Zeitdauer wird die Änderung der Zustandsgröße ermittelt.

Sowohl Einflussgrößen als auch Zustandsgrößen sind nicht auf reellwertige Größen beschränkt, sondern können beispielsweise auch komplexwertig oder vektorwertig sein.

Unter einem Modell wird allgemein ein, beispielsweise funktionaler, Zusammenhang verstanden, der eine Abhängigkeit der Ausgangsgröße von einer oder mehreren Einflussgrößen beschreibt, welche zumindest phänomenologisch im Einklang mit den innerhalb des Luftfilters von einer oder mehreren Einflussgrößen auf die Ausgangsgröße führenden physikalischen Gesetzmäßigkeiten steht. Dabei beinhaltet ein Modell in der Regel eine mehr oder weniger starke Vereinfachung bzw. Abstraktion dieser physikalischen Gesetzmäßigkeiten. Der Grad dieser Vereinfachung bzw. Abstraktion richtet sich einerseits nach der erforderlichen Genauigkeit, mit der das Modell die physikalischen Gesetzmäßigkeiten abbilden muss, und andererseits nach dem Aufwand für die (beispielsweise rechentechnische) Handhabung.

Das Modell kann beispielsweise eine oder mehrere theoretisch oder empirisch ermittelte Formeln, und/oder eine oder mehrere theoretisch oder empirisch ermittelte Kennlinien, umfassen. Beispielsweise kann die Abhängigkeit der Druckdifferenz zwischen dem Eingang und dem Ausgang des Luftfilters von vielen Einflussgrößen näherungsweise durch eine exponentielle Trendlinie modelliert werden. Alternativ oder auch in Kombination hierzu kann das Modell beispielsweise einen parametrisierten funktionalen Ansatz umfassen, dessen Parameter basierend auf Erfahrungswissen durch Fitten, durch Trainieren oder in sonstiger Weise zutreffend eingestellt werden können, so dass der Ansatz die besagten physikalischen Gesetzmäßigkeiten hinreichend genau abbildet.

Das Modell muss aber nicht zwangsläufig aus bekannten funktionalen Zusammenhängen zwischen Einflussgrößen und Zustandsgrößen gewonnen werden. Vielmehr kann die Abhängigkeit der Zustandsgrößen von den Einflussgrößen auch durch Machine Learning aus Verläufen von Einflussgrößen einerseits und Zustandsgrößen andererseits gewonnen werden. Funktionale physikalische Zusammenhänge wirken dann immer noch "im Hintergrund", müssen aber nicht explizit bekannt sein, um Zustandsgrößen aus Einflussgrößen vorhersagen zu können.

Es wurde erkannt, dass die Veränderungsrate der Zustandsgrößen, die die Standzeit und/oder Leistungsfähigkeit eines Luftfilters charakterisieren, in hohem Maße von Einflussgrößen abhängt, die auf den Luftfilter wirken.

Zu diesen Einflussgrößen gehören statische (d.h., ständig auf den Luftfilter wirkende) Einflussgrößen, wie beispielsweise die Position des Luftfilters in einer Anordnung aus mehreren Luftfiltern oder auch die Höhe über Normalnull, auf der der Luftfilter installiert ist. So wirkt sich beispielsweise die Reihenfolge von Filterstufen in einer Anordnung aus mehreren Luftfiltern darauf aus, welche Arten von Partikeln welche Filterstufe überhaupt erreichen können. Die Höhe über Normalnull wirkt sich auf die Dichte der durch den Luftfilter geförderten Luft aus. Statische Faktoren definieren gewissermaßen eine Basisrate, mit der die Zustandsgröße des Luftfilters ausgehend vom Neu- bzw. Frischzustand in Richtung auf die nächste erforderliche Reinigung, bzw. auf den nächsten erforderlichen Austausch, des Luftfilters voranschreitet.

Daneben gibt es aber auch viele dynamische Einflussgrößen, die nur für begrenzte Zeiträume auf den Luftfilter wirken, dafür aber während dieser Zeiträume die Zustandsgröße besonders schnell in Richtung auf die nächste erforderliche Wartung, bzw. auf den nächsten erforderlichen Austausch, vorantreiben. Das sporadische Wirken solcher Einflussgrößen ist, wenn nicht gezielt hiernach gesucht wird, schwer zu entdecken, kann aber gleichwohl einen großen Einfluss auf die verbleibende Standzeit des Luftfilters haben. So kann beispielsweise die Kombination aus einem Waldbrand und einer vom Brandort zum Installationsort des Luftfilters führenden Windrichtung den Luftfilter in kürzester Zeit mit einer Partikeldosis beaufschlagen, die der Luftfilter sonst in einem ganzen Jahr erhält. Damit wäre eine allein auf statischen Einflussgrößen beruhende Prognose für die Standzeit des Luftfilters mit einem Schlag ungültig.

Sieht man von völlig unvorhersehbaren Ereignissen, wie etwa Waldbränden, ab, ermöglicht es das Verfahren zur Vorhersage, die Wirkung eines sehr inhomogenen und zeitlich variablen Kanons von Einflussgrößen auf die Standzeit und/oder auf die Leistungsfähigkeit des Luftfilters zu quantifizieren. Die hierbei erzielbare Genauigkeit reicht zumindest aus, um beispielsweise anstehende Wartungsmaßnahmen im Rahmen der betrieblichen Randbedingungen vorausschauend planen zu können. Damit lassen sich die Gesamtkosten dieser Wartungsmaßnahmen, die sich aus den Kosten für die Arbeiten selbst und den Kosten für die Stillstandszeit der mit der Zuluft versorgten Anlage zusammensetzen, minimieren.

In einer besonders vorteilhaften Ausgestaltung umfasst die Einflussgröße eine oder mehrere der folgenden Größen:
- die Position des Luftfilters in einer Anordnung aus mehreren Luftfiltern (wie zuvor erläutert);
- Parameter, die die Anlage, in der der Luftfilter installiert ist, und/oder die Betriebsführung dieser Anlage charakterisieren. Beispielsweise kann der Luftdurchsatz durch eine Turbomaschine abhängig vom Lastzustand variieren;
- die Art der Nutzung mindestens eines Orts oder einer Fläche in der Umgebung um den Installationsort des Luftfilters. Beispielsweise produzieren Fahrzeuge, die entlang von Straßen fahren, Feinstaub, während landwirtschaftliche Flächen zur jeweiligen Blütezeit Pollen freisetzen;
- Veranstaltungen und/oder Arbeiten an mindestens einem Ort oder auf einer Fläche. Beispielsweise wirbelt das Mähdreschen auf einer landwirtschaftlichen Fläche große Mengen Staub auf;
- die Emissionsrate mindestens eines partikelförmigen und/oder gasförmigen Stoffs von mindestens einer Emissionsquelle, wie beispielsweise einer benachbarten industriellen Anlage oder einem Feuer, sowie ggfs. die Anzahl und Größenverteilung der Partikel;
- die Boden- und/oder Lufttemperatur, und/oder Luftfeuchtigkeit, am Installationsort des Luftfilters, und/oder an mindestens einem sonstigen Ort oder auf mindestens einer sonstigen Fläche;
- die Windrichtung und/oder Windstärke am Installationsort des Luftfilters, und/oder an mindestens einem sonstigen Ort oder auf mindestens einer sonstigen Fläche; und/oder
- Art und Stärke von Niederschlägen am Installationsort des Luftfilters, und/oder an mindestens einem sonstigen Ort oder auf mindestens einer sonstigen Fläche.

So lässt sich beispielsweise bei der Planung von Wartungsmaßnahmen berücksichtigen, dass in einem verregneten Sommer beispielsweise einerseits deutlich mehr Partikel bestimmter Arten aus der Luft ausgewaschen werden als in einem Dürresommer, während andererseits bestimmte andere Arten von Partikeln durch den Regen aufgewirbelt werden.

Alternativ oder auch in Kombination zu Werten der vorgenannten Einflussgrößen können beispielsweise auch Werte von Größen gemessen werden, mit denen die vorgenannten Einflussgrößen korreliert sind, ohne dass hieraus die Werte der Einflussgrößen unmittelbar und eindeutig hervorgehen müssen. Hierbei kann es sich insbesondere um Größen handeln, die einfacher direkt gemessen werden können als die Einflussgrößen selbst. So kann beispielsweise aus dem Energieverbrauch, aus den Vibrationen und/oder aus der Akustik eines Zuluftsystems, das den Luftfilter enthält, der Betriebszustand der Anlage gefolgert werden, der wiederum zumindest ein Faktor dafür ist, wie stark der Luftfilter je Zeiteinheit belastet wird.

In einer weiteren besonders vorteilhaften Ausgestaltung wird dem Modell eine Kombination von Werten physikalisch zusammenwirkender Einflussgrößen zugeführt. Auf diese Weise kann das Vorwissen über dieses physikalische Zusammenwirken genutzt werden, um die Genauigkeit der Vorhersage für die Zustandsgröße zu verbessern.

Das physikalische Zusammenwirken kann insbesondere beispielsweise
- ein Zusammenspiel aus der Bildung und/oder Freisetzung mindestens eines partikelförmigen und/oder gasförmigen Stoffs mit der Förderung dieses Stoffs in Richtung auf den Luftfilter durch Wind, und/oder
- eine Agglomeration von Partikeln, und/oder eine sonstige Umwandlung mindestens eines mit der Luft in Richtung auf den Luftfilter transportierbaren Stoffs, durch Luftfeuchtigkeit, und/oder
- eine chemische und/oder physikalische Wechselwirkung zweier oder mehrerer mit der Luft in Richtung auf den Luftfilter transportierbarer Stoffe
umfassen.

Die Vorhersage der Zustandsgröße, bzw. ihrer Änderung, kann in vielfältiger Weise genutzt werden, um im Rahmen der betrieblichen Randbedingungen Wartungsmaßnahmen zu koordinieren und die Kosten hierfür zu reduzieren. In Antwort darauf, dass die vorhergesagte Zustandsgröße, bzw. die vorhergesagte Änderung, ein vorgegebenes Kriterium erfüllt, können verschiedene Aktionen einzeln oder in Kombination ausgelöst werden. Weiterhin kann beispielsweise die Auslegung und Auswahl eines gefilterten Zuluftsystems, insbesondere durch Auswahl der richtigen Filter für die zu erwartenden Partikelmengen und Partikelgrößen, durch Heranziehung der nun zur Verfügung stehenden Vorhersage verbessert werden. Die Vorhersage ermöglicht es also, proaktiv zu agieren, um so weniger auf ungeplante Vorkommnisse reagieren zu müssen.

Beispielsweise kann ein Zeitpunkt, zu dem eine Wartung (etwa Reinigung) und/oder ein Austausch des Luftfilters sinnvoll ist, festgelegt werden. Dies muss nicht zwangsläufig der Zeitpunkt sein, zu dem der Filter völlig erschöpft ist. Wird der Filteraustausch beispielsweise voraussichtlich an einem Feiertag fällig, können für die entsprechenden Arbeiten teure Feiertagszuschläge anfallen. Es kann dann wirtschaftlicher sein, die Arbeiten einige Werktage zuvor durchzuführen und somit etwas von der Rest-Standzeit des Filters zu "opfern". Umgekehrt kann es beispielsweise sinnvoll sein, die Filterwartung einer Zuluftfiltration für eine Kraftwerksturbine auf einen Zeitraum zu legen, zu der die Stromnachfrage geringer ist, um die Auswirkungen auf das Stromnetz sowie den Verdienstausfall zu vermindern.

Beispielsweise kann ein Bestellvorgang für den Luftfilter, und/oder für mindestens ein Ersatzteil für den Luftfilter, ausgelöst werden. Auf diese Weise kann gewährleistet werden, dass zu dem Zeitpunkt, zu dem die Wartung fällig bzw. geplant ist, der Luftfilter, bzw. das Ersatzteil, wirklich zur Verfügung steht. Gerade selten benötigte ältere Luftfilter sowie Ersatzteile hierfür sind nicht immer sofort an jedem Ort verfügbar.

Beispielsweise kann die Anlage, in der der Luftfilter installiert ist, mit einem Ansteuersignal angesteuert werden. Dies kann insbesondere beispielsweise zum Ziel haben, den Betrieb der Anlage auf eine bereits verminderte Leistungsfähigkeit des Luftfilters abzustimmen. Es kann auch beispielsweise der Luftdurchsatz der Anlage gedrosselt werden, um den Zeitpunkt, zu dem der Luftfilter völlig erschöpft ist, bis zu einem Zeitpunkt hinauszuzögern, zu dem die Wartung weniger Kosten und/oder weniger Folgewirkungen auf den Anlagenbetrieb verursacht.

In einer weiteren besonders vorteilhaften Ausgestaltung wird ein trainierbares Machine Learning-Modell als Modell gewählt. Unter einem Machine Learning-Modell wird insbesondere ein Modell verstanden, in dem die funktionale Abhängigkeit der Ausgangsgröße von der Einflussgröße durch eine mit anpassbaren Parametern parametrierte Funktion mit großer Kraft zur Verallgemeinerung charakterisiert ist. Das Machine Learning-Modell kann insbesondere beispielsweise mindestens ein künstliches neuronales Netzwerk, KNN, umfassen, und/oder es kann ein solches KNN sein. Die große Kraft zur Verallgemeinerung kann genutzt werden, um nach einem Training des Machine Learning-Modells mit einer endlichen Anzahl Situationen, in denen die Einflussgrößen und die Zustandsgröße jeweils bekannt sind, auch in bislang unbekannten Situationen, die nicht Gegenstand des Trainings waren, zu einer zutreffenden Vorhersage der Zustandsgröße zu gelangen.

Das Machine Learning-Modell lässt sich insbesondere an Hand von Beobachtungen einer oder mehrerer Einflussgrößen einerseits und einer oder mehrerer Zustandsgrößen andererseits im realen Betrieb trainieren. Die Erfindung bezieht sich daher auch auf ein Verfahren zum Trainieren eines trainierbaren Machine Learning-Modells für den Einsatz in dem zuvor beschriebenen Verfahren.

Im Rahmen dieses Verfahrens wird mindestens ein Ist-Zeitverlauf mindestens einer Zustandsgröße, die die Standzeit und/oder Leistungsfähigkeit mindestens eines Luftfilters charakterisiert, erfasst. Weiterhin wird mindestens ein Ist-Zeitverlauf einer Einflussgröße, von der die Änderung der Zustandsgröße je Zeiteinheit abhängt, erfasst. Beispielsweise kann an einem Luftfilter der Fortschritt der Druckdifferenz, und/oder der Fortschritt der Beladung mit Partikeln, mit einer beliebigen Methode gemessen werden.

Es werden eine oder mehrere Zeitableitungen des Ist-Verlaufs der Zustandsgröße gebildet. Parameter, die das Verhalten des Machine Learning-Modells charakterisieren, werden dahingehend optimiert, dass das Machine Learning-Modell Werte aus dem Ist-Zeitverlauf einer oder mehrerer Einflussgrößen nach Maßgabe einer Kostenfunktion (auch Loss-Funktion genannt) möglichst zutreffend auf Werte der einen oder mehreren Zeitableitungen abbildet. Bei einem KNN können die Parameter beispielsweise Gewichte umfassen, mit denen die einem Neuron oder einer anderen Recheneinheit zugeführten Eingaben zu einer Aktivierung dieses Neurons, bzw. dieser Recheneinheit, verrechnet werden. Durch die Art der Kostenfunktion lässt sich insbesondere granular einstellen, welche Abweichungen einer auf Grund einer oder mehrerer Einflussgrößen vorhergesagten Zeitableitung (Änderung) der Zustandsgröße von der tatsächlichen Zeitableitung dieser Zustandsgröße wie stark "bestraft" werden sollen.

Bei dieser Art von Training lernt das Machine Learning-Modell, wie sich Einflussgrößen und Kombinationen hieraus auf die Zustandsgröße auswirken. Dabei werden Mehrdeutigkeiten dahingehend aufgelöst, dass sich im Mittel über alle verwendeten Trainingsdaten die wenigsten Widersprüche ergeben. Hierbei kann sich insbesondere herauskristallisieren, welche der erfassten Einflussgrößen sich überhaupt in nennenswertem Umfang auf die zeitliche Rate auswirken, mit der sich die Zustandsgröße ändert. Je mehr Trainingsdaten zur Verfügung stehen, desto besser können die Mehrdeutigkeiten aufgelöst werden.

Wenn die Trainingsdaten beispielsweise nur Situationen umfassen, in denen eine zum Installationsort des Luftfilters benachbarte Industrieanlage entweder stillsteht oder Produktionsprozesse durchführt, welche sowohl Lärm als auch Partikel emittieren, kann das Machine Learning-Modell die resultierende schnellere Beladung des Luftfilters sowohl dem Lärm als auch der Partikelemission zuschreiben. Umfassen die Trainingdaten hingegen zusätzlich auch Situationen, in denen es zwar leise ist, aber gleichwohl viele Partikel emittiert werden, wird das Machine Learning-Modell die schnellere Beladung des Luftfilters richtigerweise mit der Partikelemission korrelieren und nicht mehr mit dem Lärm.

Der Begriff "erfassen" ist in diesem Zusammenhang nicht dahingehend einschränkend zu verstehen, dass eigene Messungen der jeweiligen Größe durchgeführt werden müssen. Vielmehr können insbesondere Einflussgrößen auch aus beliebiger anderer Quelle beschafft werden. So können beispielsweise Informationen zu Wetterbedingungen oder zum Pollenflug auch von Wetterdiensten abgerufen werden.

Weiterhin müssen die Einflussgröße einerseits und die Zustandsgröße andererseits nicht gleichzeitig erfasst werden. Insbesondere kann beispielsweise der Zeitverlauf einer neu zu berücksichtigenden Einflussgröße nachträglich beschafft werden, wenn sich nachträglich herausstellt, dass sich mit den bislang berücksichtigten Einflussgrößen der Verlauf der Zustandsgröße noch nicht hinreichend genau erklären lässt. So kann es beispielsweise erst im Nachhinein auffallen, dass von Waldbränden oder einem Feuerwerk emittierte Partikel bei einer unerwartet schnellen Beladung eines Luftfilters eine Rolle gespielt haben können.

Das Identifizieren derjenigen Einflussgrößen, die sich maßgeblich auf den Verlauf der Zustandsgröße auswirken, kann dem Training eines Machine Learning-Modells, und generell auch dem sonstigen Aufstellen eines (beispielsweise regelbasierten) Modells für die Vorhersage der Zustandsgröße, auch vorgeschaltet werden. Wenn beispielsweise beabsichtigt ist, eine Näherungsformel für die Abhängigkeit der Zustandsgröße von den Einflussgrößen aufzustellen, dann wird diese Arbeit deutlich erleichtert, wenn die überhaupt in Frage kommenden Einflussgrößen bereits vorab mit einem automatisierten Verfahren ermittelt wurden.

Daher bezieht sich die Erfindung auch ganz allgemein auf ein Verfahren zum Identifizieren mindestens einer Einflussgröße, von der die Änderung einer die Standzeit und/oder Leistungsfähigkeit mindestens eines Luftfilters charakterisierenden Zustandsgröße abhängt.

Im Rahmen dieses Verfahrens wird ein Kandidaten-Zeitverlauf mindestens einer Kandidaten-Einflussgröße erfasst, wobei "erfassen", wie zuvor erläutert, das Beschaffen aus einer beliebigen Quelle umfasst. Weiterhin wird ein Ist-Zeitverlauf der Zustandsgröße erfasst.

Es wird ein Korrelationsmaß für die Korrelation von Änderungen des Ist-Zeitverlaufs mit Änderungen des Kandidaten-Zeitverlaufs ermittelt. In Antwort darauf, dass das ermittelte Korrelationsmaß eine vorgegebene Bedingung erfüllt, wird die Kandidaten-Einflussgröße als für die Zustandsgröße relevante Einflussgröße identifiziert.

Es muss nicht Aufgabe des Korrelationsmaßes sein, auch schon die konkrete Abhängigkeit der Zustandsgröße von der Einflussgröße zu ermitteln. Bereits eine binäre Klassifikation, welche Einflussgrößen besonders relevant sind, ist ein wesentliches Hilfsmittel für das anschließende Aufstellen eines Modells, unabhängig davon, ob dieses Modell beispielsweise ein Machine Learning-Modell, ein sonstiges parametrisiertes Modell, eine Näherungsformel oder beispielsweise auch ein regelbasiertes Modell beinhaltet.

Für jeden der genannten Schritte zum Identifizieren mindestens einer Einflussgröße kann wiederum Machine Learning genutzt werden. Beispielsweise kann die besagte (binäre) Klassifikation mit einem hierfür entsprechend trainierten Klassifikator vorgenommen werden.

In einer weiteren besonders vorteilhaften Ausgestaltung werden Änderungen des Ist-Zeitverlaufs, die von bereits bekannten Einflussgrößen herrühren, identifiziert und zumindest teilweise unterdrückt. Die Suche wird dann gezielt auf neue Einflussgrößen fokussiert, bei denen es eine neue Erkenntnis darstellt, inwieweit sie sich auf die Zustandsgröße auswirken.

Allgemein kann jedes bereits vorhandene Vorwissen über die Abhängigkeit der Zustandsgröße von bestimmten Einflussgrößen verwendet werden, um gezielt nach neuen Einflussgrößen zu suchen, deren Berücksichtigung die Vorhersage der Zustandsgröße weiter verbessert.

Zu diesem Zweck wird in einer weiteren besonders vorteilhaften Ausgestaltung ein erster Zeitverlauf der Zustandsgröße auf der Basis eines ersten Modells ermittelt. Dieses erste, bereits vorhandene Modell verknüpft eine oder mehrere bereits bekannte Einflussgrößen mit mindestens einem Beitrag zur Änderung der Zustandsgröße je Zeiteinheit. Auf der Basis eines Vergleichs des ersten Zeitverlaufs mit dem Ist-Zeitverlauf der Zustandsgröße wird ein erstes Fehlermaß ermittelt.

Ein zweiter Zeitverlauf der Zustandsgröße wird auf der Basis eines zweiten Modells ermittelt, das die Kandidaten-Einflussgröße mit mindestens einem Beitrag zur Änderung der Zustandsgröße je Zeiteinheit verknüpft. Dieser Beitrag kann additiv zu den Beiträgen der bereits bekannten Einflussgrößen hinzukommen, oder er kann diese Beiträge ganz oder teilweise ersetzen. Auf der Basis eines Vergleichs des zweiten Zeitverlaufs mit dem Ist-Zeitverlauf der Zustandsgröße wird ein zweites Fehlermaß ermittelt.

Das Korrelationsmaß in Bezug auf die Kandidaten-Einflussgröße wird nun auf der Basis eines Vergleichs des ersten Fehlermaßes mit dem zweiten Fehlermaß ermittelt. Dieses Korrelationsmaß kann insbesondere umso besser sein, je besser das zweite Fehlermaß im Vergleich zum ersten Fehlermaß ist. Wenn also die Berücksichtigung der Kandidaten-Einflussgröße die Genauigkeit verbessert, mit der die Zustandsgröße sich vorhersagen lässt, dann spricht vieles dafür, dies auch zu tun.

Das Training eines Machine Learning-Modells kann insbesondere in den Parametern verkörpert sein, die das Verhalten dieses Machine Learning-Modells charakterisieren. Wer diese Parameter besitzt, kann das Machine Learning-Modell unmittelbar verwenden, ohne es zuvor trainieren zu müssen. Daher ist ein Parametersatz von Parametern, die das Verhalten eines trainierten Machine Learning-Modells charakterisieren und mit dem zuvor beschriebenen Trainingsverfahren erhalten wurden, ein eigenständig verkaufbares Produkt.

Die Verfahren können insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, eines der beschriebenen Verfahren auszuführen. In diesem Sinne sind auch Steuergeräte und Embedded-Systeme für Zuluftfiltrationssysteme, für Systeme zur Unterstützung der Planung und/oder des Betriebs von Zuluftfiltrationssystemen oder für sonstige technische Geräte als Computer anzusehen, da sie die ebenfalls in der Lage sind, maschinenlesbare Anweisungen auszuführen.

Ebenso bezieht sich die Erfindung auch auf einen maschinenlesbaren Datenträger und/oder auf ein Downloadprodukt mit dem Parametersatz, und/oder mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
Figur 1: Ausführungsbeispiel des Verfahrens 100 zur Vorhersage einer Änderung 2a einer Zustandsgröße 2;
Figur 2: Ausführungsbeispiel des Verfahrens 200 zum Trainieren eines Machine Learning-Modells 5;
Figur 3: Ausführungsbeispiel des Verfahrens 300 zum Identifizieren relevanter Einflussgrößen 3.

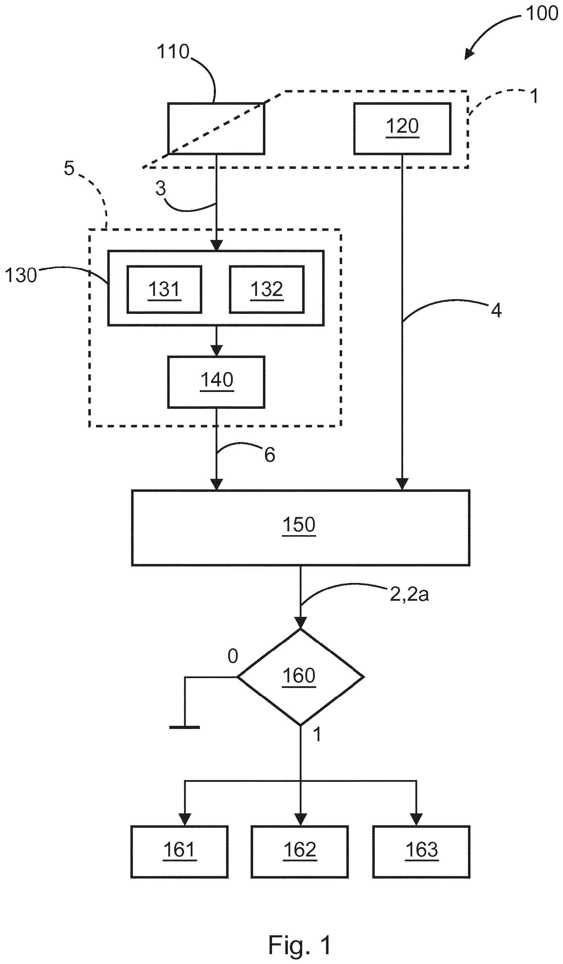

Figur 1 ist ein Ablaufdiagramm eines Ausführungsbeispiels des Verfahrens 100 zur Vorhersage einer Änderung 2a einer Zustandsgröße 2, welche die Standzeit und/oder Leistungsfähigkeit mindestens eines Luftfilters charakterisiert.

In Schritt 110 wird mindestens ein Wert mindestens einer Einflussgröße 3 erfasst. Dieser Wert wird in Schritt 130 einem Modell 5 zugeführt, und die in Schritt 140 vom Modell 5 gelieferte Ausgangsgröße 6 ist ein Maß für den durch die Einflussgröße 3 bewirkten Beitrag zur Änderung der Zustandsgröße 2 je Zeiteinheit.

In Schritt 120 wird eine Zeitdauer erfasst, für die die Einflussgröße 3 auf den Luftfilter wirkt. Dies kann, wie in Figur 1 gezeichnet, parallel zur Erfassung und Verarbeitung der Einflussgröße 3 selbst erfolgen, aber auch davor oder danach. Wie zuvor erläutert, kann es neben dynamischen Einflussgrößen 3, die zeitweise auf den Luftfilter 1 wirken, auch statische Einflussgrößen 3 geben, die permanent auf den Luftfilter 1 wirken.

Aus der Ausgangsgröße 6 und der Zeitdauer 4 wird in Schritt 150 die gesuchte Änderung 2a der Zustandsgröße 2 ermittelt. Dies ist gewissermaßen der Betrag, den die Wirkung der Einflussgröße 3 in der ermittelten Stärke während der Zeitdauer 4 vom "Lebenskonto" des Luftfilters 1 "abbucht". Die Genauigkeit, mit der der Stand dieses "Lebenskonto" sich vorhersagen lässt, richtet sich insbesondere danach, wie häufig sich Zusammensetzung und Stärke der wirksamen Einflussgrößen 3 ändern und mit welcher zeitlichen Granularität dies erfasst wird. Wenn beispielsweise die Einflussgröße 3 mit einem festen periodischen Zeitintervall abgetastet wird, dann legt dieses Zeitintervall die minimale Zeitdauer 4 fest, auf die sich erfasste Werte der Einflussgrößen 3 beziehen können.

Innerhalb des Kastens 130 sind beispielhaft zwei Ausgestaltungen dargestellt. Gemäß Block 131 kann dem Modell 5 eine Kombination von Werten physikalisch zusammenwirkender Einflussgrößen 3 zugeführt werden, um das Vorwissen über dieses Zusammenwirken zu nutzen. Gemäß Block 132 kann ein trainierbares Machine Learning-Modell als Modell 5 gewählt werden.

In dem in Figur 1 gezeigten Beispiel wird in Schritt 160 geprüft, ob die Änderung 2a der Zustandsgröße 2, und/oder die auf dieser Basis vorhergesagte Zustandsgröße 2, ein vorgegebenes Kriterium erfüllt. Ist dies der Fall (Wahrheitswert 1), können verschiedene Maßnahmen getroffen werden, die in Figur 1 beispielhaft dargestellt sind. Gemäß Schritt 161 kann ein Zeitpunkt für eine Wartung (etwa für eine Reinigung) und/oder einen Austausch des Luftfilters 1 festgelegt werden. Gemäß Schritt 162 kann ein Bestellvorgang für mindestens ein Ersatzteil für den Luftfilter 1 ausgelöst werden. Gemäß Schritt 163 kann die Anlage, in der der Luftfilter 1 installiert ist, mit einem Ansteuersignal angesteuert werden, um beispielsweise den Zeitpunkt, zu dem die Wartung bzw. der Austausch des Luftfilters 1 fällig wird, hinauszuzögern.

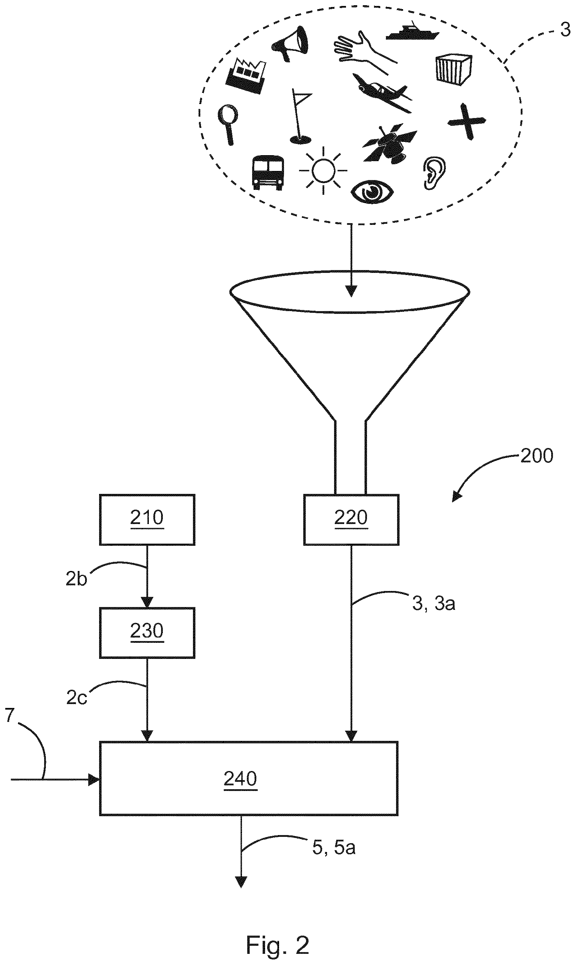

Figur 2 ist ein Ablaufdiagramm eines Ausführungsbeispiels des Verfahrens 200 zum Trainieren eines trainierbaren Machine Learning-Modells 5, mit dem sich dann wiederum die Änderung 2a einer Zustandsgröße 2 vorhersagen lässt.

In Schritt 210 wird mindestens ein Ist-Zeitverlauf 2b mindestens einer Zustandsgröße 2, die die Standzeit und/oder Leistungsfähigkeit mindestens eines Luftfilters 1 charakterisiert, erfasst. Hieraus werden in Schritt 230 eine oder mehrere Zeitableitungen 2c gebildet.

In Schritt 220 wird mindestens ein Ist-Verlauf 3a einer Einflussgröße 3, von der die Änderung der Zustandsgröße 2 je Zeiteinheit abhängt, erfasst. Wie in Figur 2 skizziert ist, kann es einen sehr diversen Kanon solcher Einflussgrößen 3 geben, die teils unabhängig voneinander wirken und teils physikalisch miteinander wechselwirken.

In Schritt 240 wird das Machine Learning-Modell 5 trainiert, indem Parameter 5a, die sein Verhalten charakterisieren, optimiert werden. Diese Optimierung ist auf das Ziel gerichtet, dass das Machine Learning-Modell 5 Werte aus dem Ist-Zeitverlauf 3a der Einflussgrößen 3 möglichst zutreffend auf Werte der einen oder mehreren Zeitableitungen 2c abbildet. Dabei kann insbesondere beispielsweise auch geprüft werden, ob eine Kombination aus Werten mehrerer Einflussgrößen 3 zutreffend auf die Zeitableitungen 2c abgebildet wird. Je besser die Übereinstimmung mit den Zeitableitungen 2c ist, desto besser ist das Machine Learning-Modell 5 in der Lage, eine Änderung 2a der Zustandsgröße 2 vorherzusagen. Wie gut die Übereinstimmung ist, wird anhand der für das Training festgesetzten Kostenfunktion (Loss-Funktion) 7 bewertet.

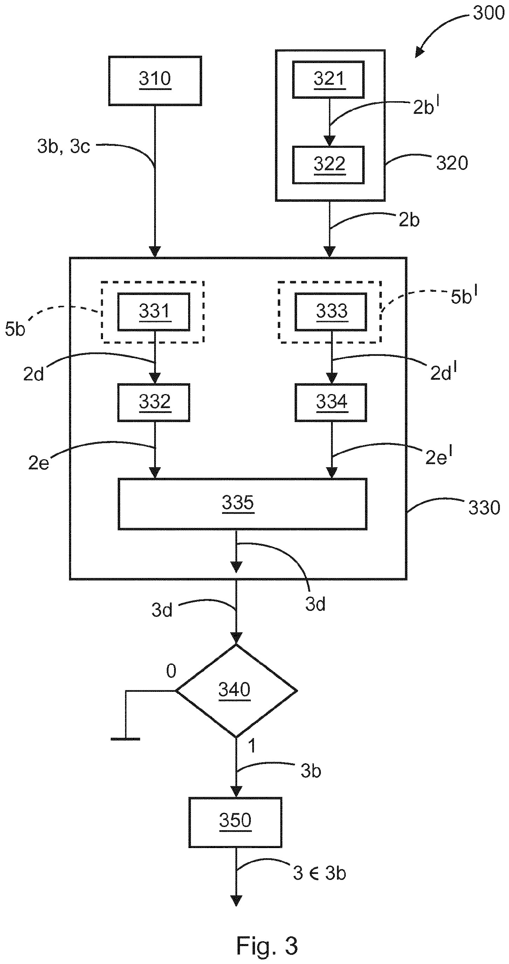

Figur 3 ist ein Ablaufdiagramm eines Ausführungsbeispiels des Verfahrens 300 zum Identifizieren mindestens einer Einflussgröße, von der die Änderung einer Zustandsgröße 2 abhängt. Die Zustandsgröße 2 charakterisiert die Standzeit und/oder Leistungsfähigkeit mindestens eines Luftfilters 1. Das Verfahren 300 prüft konkrete Kandidaten-Einflussgrößen 3b dahingehend, ob sie im Hinblick auf Änderungen 2a der Zustandsgröße 2 relevant sind.

In Schritt 310 wird ein Kandidaten-Zeitverlauf 3c mindestens einer Kandidaten-Einflussgröße 3b erfasst. In Schritt 320 wird ein Ist-Zeitverlauf 2b der Zustandsgröße 2 erfasst. In Schritt 330 wird ein Korrelationsmaß 3d für die Korrelation von Änderungen des Ist-Zeitverlaufs 2b mit Änderungen des Kandidaten-Zeitverlaufs 3c ermittelt. In Antwort darauf, dass das ermittelte Korrelationsmaß 3d eine vorgegebene Bedingung 340 erfüllt, wird die Kandidaten-Einflussgröße 3b als eine für die Entwicklung der Zustandsgröße 2 relevante Einflussgröße 3 identifiziert.

Innerhalb des Kastens 320 ist eine beispielhafte Ausgestaltung für die Erfassung des Ist-Zeitverlaufs 2b der Zustandsgröße 2 angegeben. Gemäß Block 321 werden Änderungen 2b' des Ist-Zeitverlaufs 2b, die von bereits bekannten Einflussgrößen 3 herrühren, identifiziert. Gemäß Block 322 werden gerade diese Änderungen 2b' zumindest teilweise unterdrückt. Diese Änderungen 2b tauchen also nicht mehr oder nur noch in vermindertem Umfang in dem Zeitverlauf 2b der Zustandsgröße 2 auf.

Innerhalb des Kastens 330 ist eine beispielhafte Ausgestaltung für das Ermitteln des Korrelationsmaßes 3d gezeigt.

Gemäß Block 331 wird ein erster Zeitverlauf 2d der Zustandsgröße 2 auf der Basis eines ersten Modells 5b ermittelt. Dieses erste Modell 5b verknüpft eine oder mehrere bekannte Einflussgrößen 3 mit mindestens einem Beitrag zur Änderung der Zustandsgröße je Zeiteinheit. Auf der Basis eines Vergleichs des ersten Zeitverlaufs 2d mit dem Ist-Zeitverlauf 2b wird ein erstes Fehlermaß 2e ermittelt. Dieses Fehlermaß gibt an, wie gut auf der Basis des ersten Modells 5b der Ist-Zeitverlauf 2b der Zustandsgröße 2 vorhergesagt werden kann.

Gemäß Block 333 wird ein zweiter Zeitverlauf 2d' der Zustandsgröße auf der Basis eines zweiten Modells 5b' ermittelt. Dieses zweite Modell verknüpft eine oder mehrere Kandidaten-Einflussgrößen 3b mit mindestens einem Beitrag zur Änderung der Zustandsgröße 2 je Zeiteinheit. Auf der Basis eines Vergleichs des zweiten Zeitverlaufs 2d' mit dem Ist-Zeitverlauf 2b wird ein zweites Fehlermaß 2e' ermittelt.

Auf der Basis eines Vergleichs des ersten Fehlermaßes 2e mit dem zweiten Fehlermaß 2e' wird das Korrelationsmaß 3d ermittelt. Dies kann insbesondere beispielsweise beinhalten, dass das Korrelationsmaß 3d umso besser ausfällt, je deutlicher die durch die Berücksichtigung der Kandidaten-Einflussgröße 3b erzielte Verbesserung des Fehlermaßes 2e' ausfällt.

### Bezugszeichenliste

- 1: Luftfilter
- 2: Zustandsgröße, charakterisiert Zustand des Luftfilters 1
- 2a: Änderung der Zustandsgröße 2
- 2b: Ist-Zeitverlauf der Zustandsgröße 2
- 2c: Zeitableitungen der Zustandsgröße 2
- 2d: erster Zeitverlauf der Zustandsgröße 2 unter bekannten Einflussgrößen 3
- 2d': zweiter Zeitverlauf der Zustandsgröße 2 unter Kandidaten-Einflussgröße 3b
- 2e: erstes Fehlermaß unter bekannten Einflussgrößen 3
- 2e': zweites Fehlermaß unter Kandidaten-Einflussgröße 3b
- 3: Einflussgröße, wirkt sich auf Zustandsgröße 2 aus
- 3a: Ist-Zeitverlauf der Einflussgröße 3
- 3b: Kandidaten-Einflussgröße
- 3c: Kandidaten-Zeitverlauf der Kandidaten-Einflussgröße 3b
- 3d: Korrelationsmaß Kandidaten-Zeitverlauf 3c mit Ist-Zeitverlauf 2b
- 4: Zeitdauer, für die Einflussgröße 3 auf Luftfilter 1 wirkt
- 5: Modell für Vorhersage der Änderungen 2a
- 5a: Parameter, charakterisieren Verhalten des Modells 5
- 5b: erstes Modell auf Basis bekannter Einflussgrößen 3
- 5b': zweites Modell, berücksichtigt Kandidaten-Einflussgröße 3b
- 6: Ausgangsgröße, geliefert von Modell 5
- 7: Kostenfunktion für Training des Modells 5
- 100: Verfahren zur Vorhersage einer Änderung 2a
- 110: Erfassen der Einflussgröße 3
- 120: Erfassen der Zeitdauer 4, für die die Einflussgröße 3 wirkt
- 130: Zuführen der Einflussgröße 3 zu Modell 5
- 131: Zuführen zusammenwirkender Einflussgrößen 3 als Kombination
- 132: Auswahl eines trainierbaren Machine Learning-Modells als Modell 5
- 140: Erzeugen der Ausgangsgröße 6 durch Modell 5
- 150: Ermitteln der Änderung 2a aus Ausgangsgröße 6 und Zeitdauer 4
- 160: Kriterium für Zustandsgröße 2 und/oder Änderung 2a
- 161: Festlegen eines Zeitpunkts für Wartung des Luftfilters 1
- 162: Auslösen eines Bestellvorgangs für Ersatzteil
- 163: Ansteuern der Anlage, in der der Luftfilter 1 installiert ist
- 200: Verfahren zum Trainieren des Machine Learning-Modells 5
- 210: Erfassen des Ist-Zeitverlaufs 2b der Zustandsgröße 2
- 220: Erfassen des Ist-Zeitverlaufs 3a der Einflussgröße 3
- 230: Bilden von Zeitableitungen 2c des Ist-Zeitverlaufs 2b
- 240: Optimieren der Parameter 5a des Machine Learning-Modells 5
- 300: Verfahren zum Identifizieren relevanter Einflussgrößen 3
- 310: Erfassen des Kandidaten-Zeitverlaufs 3c der Kandidaten-Einflussgröße 3b
- 320: Erfassen des Ist-Zeitverlaufs 2b der Zustandsgröße 2
- 330: Bilden des Korrelationsmaßes 3d
- 331: Ermitteln des ersten Zeitverlaufs 2d mit erstem Modell 5b
- 332: Ermitteln des ersten Fehlermaßes 2e aus erstem Zeitverlauf 2d
- 333: Ermitteln des zweiten Zeitverlaufs 2d' mit zweitem Modell 5b'
- 334: Ermitteln des zweiten Fehlermaßes 2e' aus zweitem Zeitverlauf 2d'
- 335: Ermitteln des Korrelationsmaßes 3d aus Fehlermaßen 2e und 2e'
- 340: Bedingung für Korrelationsmaß 3d
- 350: Ermitteln der Kandidaten-Einflussgröße 3b als relevante Einflussgröße 3

## Patentansprüche

1. Verfahren (200) zum Trainieren eines trainierbaren Machine Learning-Modells (5), welches dazu ausgebildet ist, mindestens einen Wert mindestens einer Einflussgröße (3), von der eine die Standzeit und/oder Leistungsfähigkeit mindestens eines Luftfilters (1) charakterisierende Zustandsgröße (2) abhängt, auf eine Ausgangsgröße (6) abzubilden, die ein Maß für den durch die mindestens eine Einflussgröße (3) bewirkten Beitrag zur Änderung der Zustandsgröße (2) je Zeiteinheit ist, mit den Schritten:
• mindestens ein Ist-Zeitverlauf (2b) der Zustandsgröße (2) wird erfasst (210);
• mindestens ein Ist-Zeitverlauf (3a) der Einflussgröße (3) wird erfasst (220);
• es werden eine oder mehrere Zeitableitungen (2c) des Ist-Verlaufs (2b) der Zustandsgröße (2) gebildet (230);
• Parameter (5a), die das Verhalten des Machine Learning-Modells (5) charakterisieren, werden dahingehend optimiert (240), dass das Machine Learning-Modell (5) Werte aus dem Ist-Zeitverlauf (3a) einer oder mehrerer Einflussgrößen (3) nach Maßgabe einer Kostenfunktion (7) möglichst zutreffend auf Werte der einen oder mehreren Zeitableitungen (2c) abbildet, wobei die Kostenfunktion angibt, welche Abweichungen einer auf Grund einer oder mehrerer Einflussgrößen vorhergesagten Zeitableitung der Zustandsgröße von der tatsächlichen Zeitableitung der Zustandsgröße wie stark bestraft werden sollen.

2. Verfahren (200) nach Anspruch 1, wobei die Einflussgröße (3) eine oder mehrere der folgenden Größen umfasst:
• die Position des Luftfilters (1) in einer Anordnung aus mehreren Luftfiltern (1);
• Parameter, die die Anlage, in der der Luftfilter (1) installiert ist, und/oder die Betriebsführung dieser Anlage charakterisieren;
• die Art der Nutzung mindestens eines Orts oder einer Fläche in der Umgebung um den Installationsort des Luftfilters (1);
• Veranstaltungen und/oder Arbeiten an mindestens einem Ort oder auf mindestens einer Fläche;
• die Emissionsrate mindestens eines partikelförmigen und/oder gasförmigen Stoffs von mindestens einer Emissionsquelle;
• die Boden- und/oder Lufttemperatur, und/oder Luftfeuchtigkeit, am Installationsort des Luftfilters (1), und/oder an mindestens einem sonstigen Ort oder auf mindestens einer sonstigen Fläche;
• die Windrichtung und/oder Windstärke am Installationsort des Luftfilters (1), und/oder an mindestens einem sonstigen Ort oder auf mindestens einer sonstigen Fläche;
• Art und Stärke von Niederschlägen am Installationsort des Luftfilters, und/oder an mindestens einem sonstigen Ort oder auf mindestens einer sonstigen Fläche.

3. Verfahren (100) nach einem der Ansprüche 1 bis 2, wobei dem Modell (5) eine Kombination von Werten physikalisch zusammenwirkender Einflussgrößen (3) zugeführt wird.

4. Verfahren (200) nach Anspruch 3, wobei das physikalische Zusammenwirken
• ein Zusammenspiel aus der Bildung und/oder Freisetzung mindestens eines partikelförmigen und/oder gasförmigen Stoffs mit der Förderung dieses Stoffs in Richtung auf den Luftfilter (1) durch Wind, und/oder
• eine Agglomeration von Partikeln, und/oder eine sonstige Umwandlung mindestens eines mit der Luft in Richtung auf den Luftfilter (1) transportierbaren Stoffs, durch Luftfeuchtigkeit, und/oder
• eine chemische und/oder physikalische Wechselwirkung zweier oder mehrerer mit der Luft in Richtung auf den Luftfilter (1) transportierbarer Stoffe umfasst.

5. Verfahren (300) nach einem der Ansprüche 1 bis 4, wobei die Zustandsgröße (2) eine sich im Betrieb des Luftfilters (1) einstellende Druckdifferenz, und/oder einen Beladungsgrad des Luftfilters (1) mit mindestens einem Stoff, umfasst.

6. Verfahren (100) zur Vorhersage einer Änderung (2a) mindestens einer Zustandsgröße (2), welche die Standzeit und/oder Leistungsfähigkeit mindestens eines Luftfilters (1) charakterisiert, mit den Schritten:
• mindestens ein Machine Learning-Modell (5) wird mit dem Verfahren (200) nach einem der Ansprüche 1 bis 5 trainiert;
• mindestens ein Wert mindestens einer Einflussgröße (3), von der die Änderung der Zustandsgröße (2) je Zeiteinheit abhängt, wird erfasst (110);
• eine Zeitdauer (4), für die die Einflussgröße (3) mit diesem Wert auf den Luftfilter (1) wirkt, wird erfasst (120);
• der mindestens eine Wert der mindestens einen Einflussgröße (3) wird dem mindestens einen trainierten Modell (5) zugeführt (130), so dass dieses Modell (5) eine Ausgangsgröße (6) liefert (140);
• aus der Ausgangsgröße (6) und der Zeitdauer (4) wird die Änderung (2a) der Zustandsgröße (2) ermittelt (150).

7. Verfahren (100) nach Anspruch 6, wobei in Antwort darauf, dass die vorhergesagte Zustandsgröße (2), und/oder die vorhergesagte Änderung (2a), ein vorgegebenes Kriterium (160) erfüllt,
• ein Zeitpunkt, zu dem eine Wartung und/oder ein Austausch des Luftfilters (1) sinnvoll ist, festgelegt wird (161);
• ein Bestellvorgang für den Luftfilter (1), und/oder für mindestens ein Ersatzteil für den Luftfilter (1), ausgelöst wird (162); und/oder
• die Anlage, in der der Luftfilter (1) installiert ist, mit einem Ansteuersignal angesteuert wird (163).

8. Computerprogramm, enthaltend maschinenlesbare Anweisungen, die, wenn sie auf einem oder mehreren Computern ausgeführt werden, den oder die Computer dazu veranlassen, ein Verfahren (100, 200) nach einem der Ansprüche 1 bis 7 auszuführen.

9. Maschinenlesbarer Datenträger und/oder Downloadprodukt mit dem Computerprogramm nach Anspruch 8.

10. Ein oder mehrere Computer, ausgerüstet mit dem Computerprogramm nach Anspruch 8, und/oder mit dem maschinenlesbaren Datenträger und/oder dem Downloadprodukt nach Anspruch 9.

## Claims

1. Method (200) for training a trainable machine learning model (5) which is designed to map at least one value of at least one influencing variable (3), on which a state variable (2) characterizing the service life and/or performance of at least one air filter (1) depends, onto an output variable (6) which is a measure of the contribution, caused by the at least one influencing variable (3), to the change in the state variable (2) per unit time, comprising the steps:
• at least one actual time profile (2b) of the state variable (2) is recorded (210);
• at least one actual time profile (3a) of the influencing variable (3) is recorded (220);
• one or more time derivatives (2c) of the actual profile (2b) of the state variable (2) is/are calculated (230);
• parameters (5a) which characterize the behaviour of the machine learning model (5) are optimized (240) to the effect that the machine learning model (5) maps values from the actual time profile (3a) of one or more influencing variables (3) in accordance with a cost function (7) as accurately as possible onto values of the one or more time derivatives (2c), wherein the cost function indicates which deviations in a time derivative, predicted on the basis of one or more influencing variables, of the state variable from the actual time derivative of the state variable should be penalized and to what extent.

2. Method (200) according to Claim 1, wherein the influencing variable (3) comprises one or more of the following variables:
• the position of the air filter (1) in an arrangement comprising a plurality of air filters (1);
• parameters which characterize the installation in which the air filter (1) is installed and/or the operational management of this installation;
• the type of use of at least one location or one surface in the area surrounding the site of installation of the air filter (1);
• events and/or work in at least one location or on at least one surface;
• the emission rate of at least one particulate and/or gaseous substance from at least one source of emission;
• the soil and/or air temperature, and/or atmospheric humidity, at the site of installation of the air filter (1) and/or in at least one other location or on at least one other surface;
• the wind direction and/or wind strength at the site of installation of the air filter (1), and/or in at least one other location or on at least one other surface;
• type and intensity of precipitation at the site of installation of the air filter, and/or in at least one other location or on at least one other surface.

3. Method (100) according to one of Claims 1 to 2, wherein a combination of values of physically interacting influencing variables (3) is supplied to the model (5).

4. Method (200) according to Claim 3, wherein the physical interaction comprises
• cooperation between the formation and/or release of at least one particulate and/or gaseous substance and the conveying of this substance in the direction of the air filter (1) by wind, and/or
• an agglomeration of particles, and/or some other conversion of at least one substance that can be transported with the air in the direction of the air filter (1), by atmospheric humidity, and/or
• a chemical and/or physical interaction between two or more substances that can be transported with the air in the direction of the air filter (1).

5. Method (300) according to one of Claims 1 to 4, wherein the state variable (2) comprises a pressure difference that is established during operation of the air filter (1), and/or degree of loading of the air filter (1) with at least one substance.

6. Method (100) for predicting a change (2a) in at least one state variable (2) which characterizes the service life and/or performance of at least one air filter (1), comprising the steps:
• at least one machine learning model (5) is trained using the method (200) according to one of Claims 1 to 5;
• at least one value of at least one influencing variable (3), on which the change in the state variable (2) per unit time depends, is recorded (110) ;
• a time period (4), for which the influencing variable (3) with said value acts on the air filter (1), is recorded (120);
• the at least one value of the at least one influencing variable (3) is supplied (130) to the at least one trained model (5), so that this model (5) delivers (140) an output variable (6);
• the change (2a) in the state variable (2) is ascertained (150) from the output variable (6) and the time period (4).

7. Method (100) according to Claim 6, wherein, in response to the predicted state variable (2), and/or the predicted change (2a), satisfying a specified criterion (160),
• a time at which servicing and/or replacement of the air filter (1) is expedient is defined (161);
• an ordering process for the air filter (1), and/or for at least one replacement part for the air filter (1), is initiated (162); and/or
• the installation, in which the air filter (1) is installed, is activated (163) using an actuation signal.

8. Computer program containing machine-readable instructions which, when they are executed on one or more computers, prompt the computer or computers to execute a method (100, 200) according to one of Claims 1 to 7.

9. Machine-readable data carrier and/or download product containing the computer program according to Claim 8.

10. One or more computers, equipped with the computer program according to Claim 8, and/or with the machine-readable data carrier and/or the download product according to Claim 9.

## Revendications

1. Procédé (200) pour entraîner un modèle d'apprentissage automatique (5) entraînable, lequel est configuré pour représenter au moins une valeur d'au moins une grandeur d'influence (3), de laquelle dépend une grandeur d'état (2) qui caractérise la durée de vie et/ou l'efficacité d'au moins un filtre à air (1), sur une grandeur de sortie (6), laquelle est une mesure pour une contribution apportée par l'au moins une grandeur d'influence (3) à la modification de la grandeur d'état (2) par unité de temps, comprenant les étapes suivantes :
● au moins un tracé réel dans le temps (2b) de la grandeur d'état (2) est acquis (210) ;
● au moins un tracé réel dans le temps (3a) de la grandeur d'influence (3) est acquis (220) ;
● une ou plusieurs dérivées dans le temps (2c) du tracé réel dans le temps (2b) de la grandeur d'état (2) sont formées (230) ;
● les paramètres (5a) qui caractérisent le comportement du modèle d'apprentissage automatique (5) sont optimisés (240) en ce que le modèle d'apprentissage automatique (5) représente les valeurs issues du tracé réel dans le temps (3a) d'une ou plusieurs grandeurs d'influence (3) d'après une fonction de coût (7) si possible fidèlement sur des valeurs de l'une ou des plusieurs dérivées dans le temps (2c), la fonction de coût indiquant quels écarts d'une dérivée dans le temps de la grandeur d'état, prédite sur la base d'une ou plusieurs grandeurs d'influence, par rapport à la dérivée dans le temps effective de la grandeur d'état doivent être sanctionnés et avec quelle sévérité.

2. Procédé (200) selon la revendication 1, la grandeur d'influence (3) comprenant une ou plusieurs des grandeurs suivantes :
● la position du filtre à air (1) dans un arrangement composé de plusieurs filtres à air (1) ;
● les paramètres qui caractérisent l'équipement dans lequel est installé le filtre à air (1) et/ou la gestion du fonctionnement de cet équipement ;
● la nature de l'utilisation d'au moins un endroit ou une surface dans l'environnement autour du lieu d'installation du filtre à air (1) ;
● les événements et/ou les travaux à au moins un endroit ou sur au moins une surface ;
● le taux d'émission d'au moins une substance particulaire et/ou gazeuse d'au moins une source d'émission ;
● la température du sol et/ou de l'air et/ou l'humidité de l'air au lieu d'installation du filtre à air (1) et/ou à au moins un autre endroit ou sur au moins une autre surface ;
● la direction du vent et/ou la force du vent au lieu d'installation du filtre à air (1) et/ou à au moins un autre endroit ou sur au moins une autre surface ;
● la nature et la force des précipitations au lieu d'installation du filtre à air et/ou à au moins un autre endroit ou sur au moins une autre surface.

3. Procédé (100) selon l'une des revendications 1 à 2, une combinaison de valeurs de grandeurs d'influence (3) interagissant physiquement étant acheminée au modèle (5) .

4. Procédé (200) selon la revendication 3, l'interaction physique comprenant
● une coopération entre la formation et/ou la libération d'au moins une substance particulaire et/ou gazeuse avec le transport de cette substance en direction du filtre à air (1) par le vent, et/ou
● une agglomération de particules et/ou une autre conversion d'au moins une substance transportable avec l'air en direction du filtre à air (1) par l'humidité de l'air, et/ou
● une action réciproque chimique et/ou physique d'au moins deux substances transportables avec l'air en direction du filtre à air (1).

5. Procédé (300) selon l'une des revendications 1 à 4, la grandeur d'état (2) comprenant une différence de pression qui s'établit lors du fonctionnement du filtre à air (1) et/ou un degré de charge du filtre à air (1) avec au moins une substance.

6. Procédé (100) de prévision d'une modification (2a) d'au moins une grandeur d'état (2), laquelle caractérise la durée de vie et/ou l'efficacité d'au moins un filtre à air (1), comprenant les étapes suivantes :
● au moins un modèle d'apprentissage automatique (5) est entraîné avec le procédé (200) selon l'une des revendications 1 à 5 ;
● au moins une valeur d'au moins une grandeur d'influence (3), de laquelle dépend la modification de la grandeur d'état (2) par unité de temps, est acquise (110) ;
● une durée (4), pendant laquelle la grandeur d'influence (3) agit avec cette valeur sur le filtre à air (1), est acquise (120) ;
● l'au moins une valeur de l'au moins une grandeur d'influence (3) est acheminée (130) à l'au moins un modèle (5) entraîné, de sorte que ce modèle (5) délivre (140) une grandeur de sortie (6) ;
● la modification (2a) de la grandeur d'état (2) est déterminée (150) à partir de la grandeur de sortie (6) et de la durée (4).

7. Procédé (100) selon la revendication 6, en réponse au fait que la grandeur d'état (2) prédite et/ou la modification (2a) prédite remplit un critère (160) prédéfini,
● un instant étant fixé (161), auquel une opération de maintenance et/ou un remplacement du filtre à air (1) est judicieux ;
● un processus d'approvisionnement pour le filtre à air (1) et/ou pour au moins une pièce de rechange pour le filtre à air (1) étant déclenché (162) ; et/ou
● l'équipement dans lequel est installé le filtre à air (1) étant commandé (163) avec un signal de commande.

8. Programme informatique, contenant des instructions lisibles par machine qui, lorsqu'elles sont exécutées sur un ou plusieurs ordinateurs, amènent le ou les ordinateurs à mettre en œuvre un procédé (100, 200) selon l'une des revendications 1 à 7.

9. Support de données lisible par machine et/ou produit à télécharger comprenant le programme informatique selon la revendication 8.

10. Un ou plusieurs ordinateurs, équipés du programme informatique selon la revendication 8 et/ou comprenant le support de données lisible par machine et/ou le produit à télécharger selon la revendication 9.
